Europäisches Patentamt

European Patent Office

Office européen des brevets

(19)

(11) Numéro de publication: **0 253 733 B1**

# (12) FASCICULE DE BREVET EUROPEEN

(45) Date de publication de fascicule du brevet:
29.05.91

(51) Int. Cl.⁵: **B29C 67/22**, A47C 7/38,
//B29L31:58

(21) Numéro de dépôt: **87401663.7**

(22) Date de dépôt: **15.07.87**

(54) **Dispositif d'injection de mousse polyuréthane dans une enveloppe creuse, notamment dans un appui-tête de véhicule.**

(30) Priorité: **18.07.86 FR 8610456**

(43) Date de publication de la demande:
**20.01.88 Bulletin 88/03**

(45) Mention de la délivrance du brevet:
**29.05.91 Bulletin 91/22**

(84) Etats contractants désignés:
**DE ES FR GB IT**

(56) Documents cités:
**EP-A- 0 061 972
EP-A- 0 094 375
CH-A- 342 749
DE-A- 2 406 041**

(73) Titulaire: **Etablissements TREVES
109 rue du Faubourg Saint-Honoré
F-75008 Paris(FR)**

(72) Inventeur: **Fermigier, Luc
5 rue de l'Université
F-75007 Paris(FR)**
Inventeur: **Fermigier, Claude
5 rue de l'Université
F-75007 Paris(FR)**

(74) Mandataire: **Bloch, Gérard et al
2, square de l'Avenue du Bois
F-75116 Paris(FR)**

## Description

La présente invention concerne des perfectionnements apportés a l'injection haute pression de mousse de polyuréthane dans une enveloppe creuse par un orifice prévu dans ladite enveloppe.

On a déjà proposé, dans le brevet CH-A-342 749 d'introduire dans un espace creux délimité par un tissu poreux, de la résine plastique à l'état préexpansé, mais encore durcissable.

Ce brevet vise essentiellement la fabrication d'isolation de tubes ou de plaques par de la matière plastique interposée entre la paroi du tube ou plaque et un tissu poreux, où elle durcit.

On connait des têtes de coulée de mousse de polyuréthane permettant d'effectuer ce travail. Le fonctionnement de ces têtes comprend généralement deux phases. La première phase est une phase de mélange, pendant laquelle au moins deux constituants de la mousse de polyuréthane, un polyol et un isocyanate, sont amenés sous haute pression dans une chambre de mélange, puis ce mélange s'écoule à travers un alésage vers une sortie, coïncidant éventuellement avec l'orifice d'une enveloppe à remplir. La seconde phase est une phase de recyclage et de nettoyage, pendant laquelle au moins un piston agit, d'une part, pour mettre en boucle sur lui-même chacun des deux circuits d'amenée des composants, et, d'autre part, pour racler les parois de l'alésage de la chambre de mélange, ceci afin de la nettoyer.

Dans EP-A-61972 est décrit aussi l'injection de mousse de polyuréthane du type défini plus haut, qui utilise une tête d'injection comprenant en outre des moyens pour amener sous ledit piston, avant l'étape d'évacuation, un organe de raclage des parois de l'alésage lorsque le piston coulisse vers la sortie de l'alésage, cet organe de raclage étant constitué par une plaquette dont les dimensions sont sensiblement égales aux dimensions de la section de l'alésage et de l'orifice, et comportant une ou plusieurs lèvres souples s'étendant continûment sur son périmètre.

Dans ce brevet, la mousse de polyuréthane est coulée en phase liquide dans l'enveloppe creuse à l'intérieur de laquelle s'opère l'expansion, ou moussage, in situ, l'enveloppe étant conformée par un moule extérieur.

Pour assurer la meilleure étanchéité possible, la paroi de l'enveloppe doit comporter, non seulement, un tissu ordinaire mais en plus une barrière pouvant être une mousse tranchée et la fabrication de l'enveloppe est coûteuse et assez délicate.

La présente invention vise à simplifier cette fabrication en évitant d'avoir à doter l'enveloppe creuse de moyens particuliers d'étanchéité, ou tout au moins d'en simplifier les caractéristiques.

A cet effet, l'invention a pour objet un dispositif d'injection haute pression de mousse de polyuréthane dans une enveloppe creuse, par un orifice prévu dans ladite enveloppe, du type comprenant une chambre de mélange des constituants de la mousse de polyuréthane, un cylindre communiquant avec ladite chambre, et ouvert à ses deux extrémités, l'une de ses extrémités débouchant dans une ouverture de l'enveloppe creuse et l'autre extrémité servant d'entrée à un piston agencé pour coulisser dans ledit cylindre et en refouler la mousse de polyuréthane dans ladite enveloppe caractérisé par le fait que l'extrémité supérieure du cylindre débouche dans l'ouverture de l'enveloppe creuse, de façon que la mousse de polyuréthane soit refoulée de bas en haut dans ladite enveloppe, et que ledit cylindre est d'un volume voisin de la moitié de celui délimité par l'enveloppe, c'est-à-dire tel que le mélange subisse une préexpansion avant d'être injecté dans l'enveloppe où il achève son expansion.

Grâce à l'invention, est injecté dans l'enveloppe, non plus un mélange de mousse liquide, mais un mélange de mousse en phase d'expansion, c'est-à-dire crêmeux, à l'état de mousse battue, et cette mousse achève son expansion dans l'enveloppe. Cette mousse n'ayant pas tendance à mouiller la paroi de l'enveloppe, aucun moyen d'étanchéité n'est plus nécessaire, ou du moins peut-il être très sommaire.

A titre nullement limitatif, on a représenté au dessin annexé un exemple de réalisation de l'invention, dessin sur lequel :
La figure 1 est une vue schématique en perspective de la tête d'injection et de l'enveloppe à remplir, et
La figure 2 est une vue en coupe transversale de l'ensemble de la figure 1.

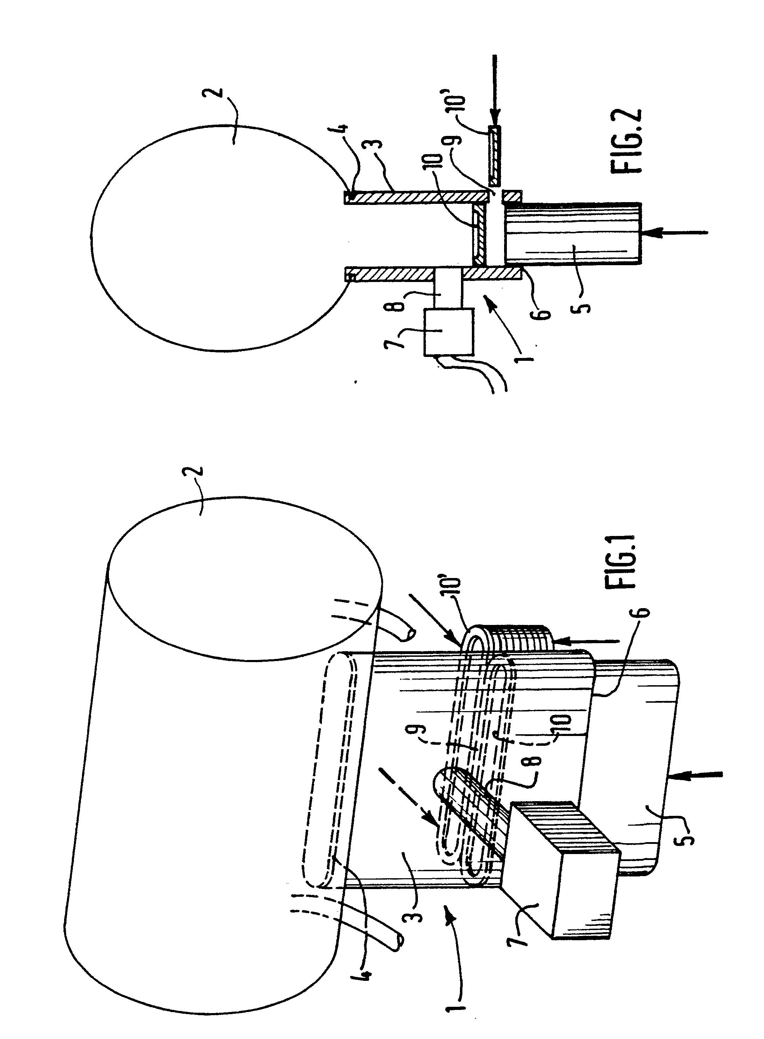

L'ensemble représenté à la figure 1 comporte un bloc d'injection, indiqué globalement par le repère 1, et une enveloppe creuse destinée à être remplie de polyuréthane expansé, indiquée globalement par la repère 2 et qui peut être destinée à constituer une matelassure d'appui-tête ou tout autre pièce de coussinage.

Le bloc d'injection 1 comporte un cylindre d'injection 3 vertical dont l'orifice supérieur 4 est engagé dans une ouverture de forme correspondante ménagée dans le fond de l'enveloppe 2. Le bloc 1 comprend également un piston 5 mû par des moyens hydrauliques, électromécaniques ou mécaniques (non représentés) pour coulisser dans le cylindre 3 entre le point haut, adjacent à l'orifice 4, et un point bas, orifice inférieur 6 de ce cylindre 3. Le bloc 1 comporte, en outre, une tête de mélange 7, de structure classique, débitant le mélange dans le cylindre 3 par l'intermédiaire du conduit 8.

Le cylindre d'injection 3 est percé à sa partie inférieure d'une lumière 9 située un peu au-dessus du point bas du piston 5. Cette fente 9 permet l'introduction d'un piston d'étanchéité 10 de forme correspondant à la section intérieure du cylindre 3 et destiné à opérer le raclage des parois intérieures de ce cylindre.

Le déroulement du processus d'injection par le dispositif selon l'invention est le suivant.

Comme on le sait, l'injection se déroule en deux phases. La première phase est la phase de coulée. Le piston de propulsion 5 étant en position basse, un piston de raclage 10 a été introduit dans le cylindre 3 par la lumière 9 et se trouve alors en contact sur la face d'extrémité supérieure du piston 5, la lumière étant obturée.

Les deux composants du mélange, polyol et isocyanate, sont amenés sous haute pression dans la chambre de mélange 7 et, sous l'effet de cette pression, le mélange est effectué, il s'écoule par le conduit dans le cylindre 3 obturé à sa base par le piston racleur 10. Au bout d'un très court instant, quelques secondes, le piston de propulsion 5 entraîne vers le haut le piston racleur 10 qui refoule, vers l'orifice 4 de l'enceinte 2, le mélange qui a subi une préexpansion et se trouve alors à l'état de mousse battue, c'est-à-dire très peu liquide. Le piston 5 poursuit sa remontée dans le cylindre 3 et fait pénétrer cette mousse dans l'enveloppe 2 où elle poursuit et achève son expansion. Le piston racleur 10 peut, bien entendu, demeurer en place à l'orifice 4 pour servir d'obturateur, ayant une fonction de finition de la pièce.

Bien entendu les formes de réalisation et de mise en oeuvre décrites ci-dessus ne sont pas restrictives, et tout dispositif d'injection à deux phases de fonctionnement comportant une étape d'obturation faisant suite à une étape de raclage, par un élément auxiliaire, ne sort pas du cadre de l'invention. En particulier, les sections de l'alésage, du piston et de la plaquette peuvent être quelconques mais sensiblement identiques.

**Revendications**

1. Dispositif d'injection haute Pression de mousse de polyuréthane dans une enveloppe creuse (2), par un orifice (4) prévu dans ladite enveloppe, du type comprenant une chambre de mélange (7) des constituants de la mousse de polyuréthane, un cylindre (3) communiquant avec ladite chambre, et ouvert à ses deux extrémités, l'une de ses extrémités débouchant dans une ouverture de l'enveloppe creuse et l'autre extrémité servant d'entrée à un piston (5) agencé pour coulisser dans ledit cylindre et en refouler la mous se de polyuréthane dans ladite enveloppe (2) caractérisé par le fait que l'extrémité superieure du cylindre (3) débouche dans l'ouverture de l'enveloppe creuse, de façon que la mousse de polyuréthane soit refoulée de bas en haut dans ladite enveloppe, et que ledit cylindre (3) est d'un volume voisin de la moitié de celui délimité par l'enveloppe (2), c'est-à-dire tel que le mélange subisse une préexpansion avant d'être injecté dans l'enveloppe où il achève son expansion.

**Claims**

1. Apparatus for high-pressure injecting a polyurethane foam into a hollow envelope (2) through a hole (4) pronded in said envelope, of the type comprising a chamber (7) for mixing the components of the polyurethane foam, a cylinder (3) communicating with said chamber and having two open ends, one of said open ends debouching into an opening of the hollow envelope and the other end being used as an inlet for a piston (5) adapted to slide in said cylinder and to push the polyurethane foam therefrom into said envelope (2) characterized in that the upper end of the cylinder (3) debouches into the opening of the hollow envelope, so that the polyurethane foam be pushed from bottom to top into said envelope and that said cylinder (3) has a volume close to half the volume limited by the envelope (2), which means such that the mixture undergoes a pre-expansion before it is injected into the envelope, where its expansion ends

**Ansprüche**

1. Vorrichtung zum Einspritzen unter Hochdruck eines Polyurethanschaumes in eine hohle Umhüllung (2) durch eine in der genannten Umhüllung vorgesehene Öffnung (4), bestehend aus einer Kammer zum Mischen (7) der Bestandteile des Polyurethanschaumes und aus einem Zylinder (3), welcher mit der genannten Kammer verbunden und an seinen beiden Enden offen ist, wobei eines seiner Enden in eine Öffnung der hohlen Umhüllung einmündet und das andere Ende als Einlauf für einen Kolben (5) dient, welcher in dem genannten Zylinder gleitet und den Polyurethanschaum aus diesem in die genannte Umhüllung (2) drückt, dadurch gekennzeichnet, daß das obere Ende des Zylinders (3) in die Öffnung der hohlen Umhüllung mündet, sodaß der Polyurethanschaum von unten nach oben in die genannte Umhüllung und daß der genannte Zylinder (3) ein Volumen aufweist, welches annähernd halb so groß ist wie dasjenige, das von der Umhüllung (2) begrenzt wird, das heißt, daß derart die Mischung vorgeschäumt wird, bevor sie in die Umhüllung eingespritzt wird, wo sie fertig aufgeschäumt wird.

FIG.2

FIG.1